(19) Europäisches Patentamt / European Patent Office / Office européen des brevets

(11) **EP 3 825 639 A1**

(12) **EUROPEAN PATENT APPLICATION**

(43) Date of publication:
26.05.2021 Bulletin 2021/21

(51) Int Cl.:
*F28F 27/00* (2006.01)　　　*G05B 13/02* (2006.01)
*F28D 7/02* (2006.01)　　　*F28F 9/00* (2006.01)

(21) Application number: 20020527.6

(22) Date of filing: 12.11.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
KH MA MD TN

(30) Priority: 19.11.2019 EP 19020655

(71) Applicant: Linde GmbH
82049 Pullach (DE)

(72) Inventors:
• Ingo, Thomas
82041 Oberhaching (DE)
• Gaurav, Padgilwar
80687 München (DE)

(74) Representative: Imhof, Dietmar
Linde GmbH
Intellectual Property EMEA
Dr.-Carl-von-Linde-Straße 6-14
82049 Pullach (DE)

(54) **METHOD FOR OPERATING A HEAT EXCHANGER**

(57)　The present invention relates to a method for operating a heat exchanger, wherein current data characterising a current operation of the heat exchanger is determined, wherein a pinch analysis is performed in dependence of the current data, wherein an optimum operating point of the heat exchanger is determined as a result of the pinch analysis.

Fig. 2

EP 3 825 639 A1

**Description**

The present invention relates to a method for operating a heat exchanger and a computing unit for performing this method.

Background of the Invention

Process engineering (also called chemical engineering) plants are usually understood to be plants for carrying out substance modifications and substance conversions with the aid of purposeful physical and/or chemical and/or biological and/or nuclear effects. Such modifications and conversions typically comprise crushing, sieving, mixing, heat transferring, cohobating, crystallizing, drying, cooling, filling, and superimposed substance transformations, such as chemical, biological or nuclear reactions.

A process engineering plant can comprise several different components such as different heat exchangers, e.g. plate-fin heat exchangers (PFHE) or coil-wound heat exchangers (CWHE), columns, e.g. distillation or adsorption or wash columns, machines like compressors, boosters, turbines, pumps, cold boxes, etc. For example, process engineering plants can be plants for producing specific gases like air separation units, natural gas plants, ethylene plants, hydrogen plants, adsorption plant, etc.

Power consumption of a process engineering plant particularly depends on the efficiencies and performances of the various components. Usually process engineering plants are operated with different scenarios and product combinations which often depend on customer demands. Operating scenarios of that kind may not always yield the best possible operation of the process engineering plant in terms of power consumption. However, it is desirable to optimise the power consumption of the plant, since even one percent improvement in plant efficiency can save up to hundred kilowatts of power.

Disclosure of the invention

According to the invention, a method for operating a heat exchanger and a computing unit for performing this method with the features of the independent claims are proposed. Advantageous further developments form the subject matter of the dependent claims and of the subsequent description.

The method according to the present invention provides a possibility to perform a so called pinch analysis (often also referred to as heat integration) online during operation of the heat exchanger. The present invention proposes to calculate heat exchanger temperature profiles as well as to perform a pinch analysis or heat integration online based on available data, particularly real time data, for inlet and outlet streams. Furthermore, energy consumption of a process based on efficiencies of machines and optimised heat exchanger profile is predicted. This present invention proposes an online optimisation of a heat exchanger operating point based on the current product demands by pinch analysis or heat integration and also using optimised machine efficiencies for better energy consumption.

Pinch analysis is a method for minimising energy consumption of chemical processes by calculating thermodynamically feasible energy targets or minimum energy consumption and achieving them by optimising heat recovery systems, energy supply methods and process operating conditions. The current data characterising the current operation of the heat exchanger, based on which the pinch analysis is performed, can be process data like characterising energy flows or streams inside the heat exchanger. Composite curves for hot streams (releasing heat) and for cold streams (requiring heat) can be determined. A point of closest approach between these hot and cold composite curves is the so called pinch point with a hot stream pinch temperature and a cold stream pinch temperature.

The heat exchanger is preferably a plate-fin heat exchanger (PFHE) and is preferably used in a process engineering plant, preferably a cryogenic plant such as an air separation unit or a natural gas unit or a plant for heat integration purposes.

Often liquid and gas demands are adjusted per customer demands, which requires process engineering plants to be turned down or ramped up, which gives rise to different operating scenarios, which are usually not considered while designing the plant. A flexible plant operation depending on energy prices is important.

Due to such various demand scenarios, a plant is operated in many different cases, which may not be the optimum points of operation in terms of overall energy consumption of the plant as operating parameters like MAC, BAC pressures, imbalances between the Joule Thomson stream, turbine stream, turbine inlet temperatures and other process parameters chosen by plant operators may not be optimal. By means of the present method, the optimum operating point of the heat exchanger and process parameters such as stream pressures, temperatures, flows are determined as a result of the pinch analysis performed online.

The pinch analysis or heat integration can be performed in dependence of temperatures, pressures and/or flows of all input and/or output streams of the heat exchanger. Output stream temperatures can be estimated using rescaled kf values (heat exchanger surface values kW/K). This applies even if the plate-fin heat exchanger comprises many blocks. Efficiency of main air compressors, booster air compressors, boosters and turbine efficiencies can be determined. Design pressure drops for estimating pressure drops in the plate and fin heat exchanger can be determined. Turbine outlet pressure, liquid production of the plant for calculation of turbine flows can be determined.

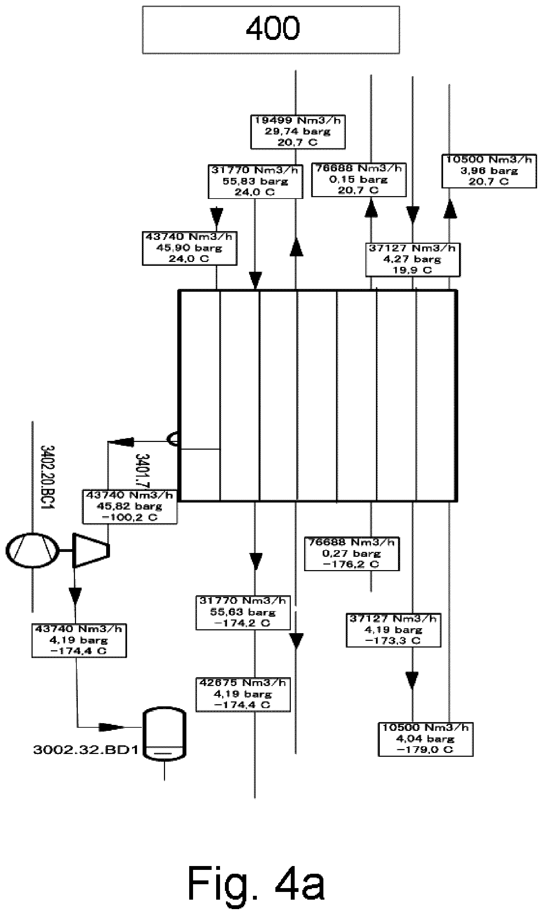

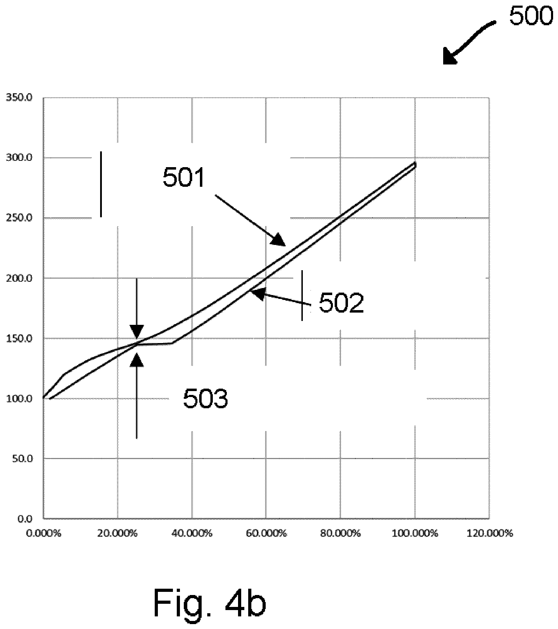

A model programmed in the so called "Optisim" Software or an "Excel" workbench tool can be used, which yields advantages regarding precise calculation of heat exchanger profiles in critical temperature ranges since GMPS properties is available for all operating conditions and since precise calculation of the pinch point and composite curves for heat integration is provided. Specific tools can be used, e.g. "Excel" tools, which can be used with critical GMPS properties and which can be adapted for dynamic control systems (DCS) and particular processes for precise composite curve (HOT and COLD curves) and pinch profile calculation, as will be e.g. in Fig. 4.

Stream data are recalculated with help of GMPS data and heat integration or pinch analysis is done with help of a workbench heat exchanger tool integrated in DCS. Pinch analysis is performed using the known data from heat exchanger and inlet outlet stream temperatures, flows and pressures. Also, it is possible to employ an "Optisim" pipe-based model as a precise rating model. This model has equipment design accuracy. It can be helpful to monitor the deviation from the theoretical power consumption with the actual power consumption. Furthermore, the heat integration can be improved in the process by changing the operating condition for improved performance of the plant. This adjustment in plant performance can be done with help of heat exchanger surface rating calculation and pinch analysis calculation online or as by machine efficiencies monitoring.

Load changes in heat exchangers may cause thermal stresses, which can reduce the equipment life time. This life consumption can be reduced by optimising process parameters during load change. For this purpose, machine learning models can be used as optimisation constraints or simplified empirical estimates can be used such as max | dT/dx | or max | dT/dt |.

Often turbine inlet temperatures are kept slightly warmer than design values by operators to avoid sudden tripping of the turbine or sudden cooling of the turbines. Thus, the cold production is generated by the Joule Thomson valve by operating it more than the design value, which also gives a stable running case, but usually leads to slightly warmer temperatures for turbines, lower turbine flows and higher Joule Thomson flows. This can result in more energy consumption and also thermal stresses that deviate from design values and can hence result in lesser life cycles for the heat exchangers. This can be avoided when the heat exchanger is operated according to the present method.

Often, better energy efficiency can be achieved when the design flow values for the turbine are used as more energy can be recovered from the expansion and utilized in the process through booster. Turbine flow needs to be increased slowly and kept close to the design values, which can vary from case to case and liquid production scenarios. Once the heat exchanger profile stabilises in the heat exchanger, the turbine inlet temperature stabilises close to the design values, which gives best energy efficiency and lesser thermal stresses as turbine inlet temperature is kept close to design values.

The plant is often operated with different scenarios and product combinations such as less liquid, more gas or in turndown scenarios, which often depend upon customer requirements. This gives rise to different production scenarios and different input airflows and pressures of main air compressors, booster air compressors and different operating conditions for turbine boosters, which are chosen either based on existing process calculations, short cut calculation methods or operator experience. However, this may not always be the best point of operation in terms of power consumption. By means of the present method, the optimum operation point can be determined. Even one percent improvement in plant efficiency can save hundred kilowatts of power.

The present invention can particularly advantageously be used for the operation of a process engineering plant according to the method, which it is disclosed in the not yet published patent application "Method for operating a process engineering plant" no. 19020654.0 of the applicant filed on the same day as the present patent application. For a detailed description of this method of operating a process engineering plant, it is referred to said application 19020654.0 to its full content. The disclosure of said application 19020654.0 shall further be fully incorporated as content of the present patent application. Advantageously, the so called heat exchanger module as it is disclosed in the application 19020654.0 is implemented by performing a preferred embodiment of the present method for operating a heat exchanger.

By means of the present invention, an online energy optimisation platform can be created, where machine module, heat exchanger module and column modules, condenser modules and valve and flow estimation modules as disclosed in the application 19020654.0 can be integrated with one another to perform overall energy optimisation of the plant and an online plant energy consumption review can be produced. Online asset management and optimization service can be provided. Plant power deviations can be studied at different point of operations and better production decisions can be taken based on optimised power. Machine rating and heat exchanger rating can be done for lifetime and decrease in performance of the machines can be observed over a period of lifetime. This information can be used for vendor selection as well as for aftersales services. Heat exchanger failures can be detected earlier if there is leakage, e.g. when strong deviation in temperatures or pressures are observed.

A computing unit according to the invention is, in particular programmatically, configured to carry out an inventive method, i.e. comprises all means for carrying out the invention.

Further aspects of the invention are a computer program with program code means for causing a computing unit to perform a method according to the invention, and a computer readable data carrier having stored thereon such a computer program. This allows for particularly low costs, especially when a performing computing unit is still used for other tasks and therefore is present anyway. Suitable media for providing the computer program are particularly floppy disks, hard disks, flash memory, EEPROMs, CD-ROMs, DVDs etc. A download of a program on computer networks (Internet, Intranet, Cloud applications, etc.) is possible.

Further advantages and embodiments of the invention will become apparent from the description and the appended figures.

It should be noted that the previously mentioned features and the features to be further described in the following are usable not only in the respectively indicated combination, but also in further combinations or taken alone, without departing from the scope of the present invention.

In the drawings

Fig. 1    schematically shows a preferred embodiment of a method according to the present invention as a block diagram,

Fig. 2    schematically shows a preferred embodiment of a method according to the present invention as a block diagram,

Fig. 3    schematically shows a preferred embodiment of a method according to the present invention as a block diagram, and

Fig. 4    schematically shows a DCS system and a temperature enthalpy diagram for a pinch analysis according to preferred embodiment of a method according to the present invention as a block diagram.

Detailed description of the figures

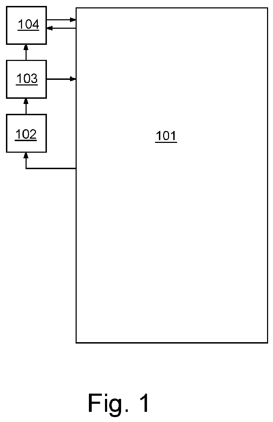

Fig. 1 schematically shows a preferred embodiment of a method according to the present invention as a block diagram for operating a heat exchanger, e.g. a plate-fin heat exchanger, of a process engineering plant, e.g. an air separation unit.

Block 101 represents a heat exchanger module which communicates with a process automation software tool 102, a DCS system of the plant and a machine module 104.

This machine module 104 evaluates online machine efficiencies, performance curves and power estimation for boosters, compressors, turbines, pumps, etc. in the plant. Further, the machine module 104 can perform online rating using data from manufacturer and anti-surge controllers as well as predictive maintenance. Further, the machine module 104 can exchanges data with real time databases (RDB) or DCS 103 for input and output values for performance monitoring and predictive maintenance.

The heat exchanger module 101 can be provided as an "Excel" workbench tool integrated in DCS. Further, the heat exchanger module 101 includes all the connected process streams and process parameter influencing the heat exchanger profile. The "Excel" workbench tool includes a heat exchanger block, cold balance, enthalpy balance, pressure drop, heat exchanger surface recalculation (kf rescaling calculations).

It is also possible, that the heat exchanger module 101 is provided and integrated with DCS as a "Smile Python" module, which can include a heat exchanger block, enthalpy balance, pressure drop, kf rescaling calculations to estimate all necessary parameters affecting the pinch profile of the heat exchanger and overall energy consumption of the plant. Monitoring product purities from DCS in case of leakage inside heat exchangers and simultaneously thermal stresses for predictive and preventive maintenance can be performed. Data based correlations can be used for monitoring thermal, mechanical stresses, and purities can also be monitored on a continuous basis. If any thermal stresses exceed limits and at the same time purity is lost, then this suggests a damage of the heat exchanger. Preventive actions can be taken in order to avoid heat exchanger failure, for example whenever thermal stresses are higher and close to the maximum allowable limits. Also monitoring the purities of product streams is possible. Preventive actions include reducing load on heat exchanger, checking valve openings and flow distributions of inlet and outlet streams, turbine inlet temperatures and product temperatures.

This heat exchanger module 101 can be used for precise calculation of heat exchanger profiles and energy optimisation. Both "Excel" workbench tool and "Smile Python" module can use GMPS data for precise property calculations.

In particular, the heat exchanger module 101 is provided to perform the following functions:
Accurate flows, temperatures, pressures can be derived from the DCS 103 to estimate the enthalpy temperature (QT) profile and pinch analysis calculation and finally to carry out heat integration of the process for energy optimization as shown in Fig. 4.

Accuracy of flow calculation can be increased by flow calculation using dp measurements from orifices directly and using data-based correlations of valve opening vs flows (e.g. by means of valve and flow correction module as disclosed in the application 19020654.0. Turbine flows can be calculated from cold balance.

Online dp calculation can be done using inlet and outlet stream pressures or recalculation can be done by using design pressure drop values.

Heat exchanger surface (kf value) rescaling calculation can be performed using design kf values and design split factors between warm and cold parts of the heat exchanger surface.

From design kf values, new kf values can be recalculated according to the formula:

$$kf = Q / MTD$$

Q is the total enthalpy in [kW] and MTD is the mean temperature difference in [K].

Turbine flow can be calculated from cold balances and Joule-Thomson streams from the total enthalpy balance of the heat exchanger. An enthalpy temperature profile is calculated based on the heat exchanger tool. Further, the actual pinch point is calculated.

With the help of an optimiser block, overall energy consumption can be optimised by QT (enthalpy temperature) profile optimisation by varying all process parameters e.g. corresponding to main air compressors, booster air compressors, pressures, flows, turbine inlet temperatures, temperature differences at a warm ends, etc.

New values of process parameters are predicted based on optimiser calculations and possible energy savings are predicted by keeping differences between cold and warm curves as low as possible. The minimum pinch point can be at 1K. Simultaneously constraints of machine minimum and maximum limits, column maximum and minimum limits, heat exchanger surface restrictions, liquefaction limits at the outlet of turbine and other process constraints are satisfied.

Data based correlations are used for determining current thermal stress conditions inside the heat exchanger for online stress analysis. Faster cooling down or warming up of more than 20°C/h can create thermal stresses and damage the heat exchangers. Predictive and preventive analysis can be carried out based on data-based correlations for thermal stress to avoid damage to the heat exchangers. In addition to thermal stress mechanical stresses can also be estimated for high pressure streams using the three-dimensional model of the plant (e.g. by means of vapour lift and pipe stress modules as disclosed in the application 19020654.0.

Once flows and temperatures from DCS are verified and correct, "Smile" heat exchanger modules can calculate detailed thermal profiles of heat exchangers along its length, pressure drop, kf rescaling calculations, and thermal stresses etc. A local module of the heat exchanger helps to estimate the current state of the plant in detail and pinch profiles of heat exchanger, which can be then optimised by the optimiser module. This helps to minimise the number of sensors and instrumentation to measure heat exchanger and plant data.

Further, artificial intelligence and machine learning programs can be used to monitor critical pressures, flows, temperatures, thermal stresses inside heat exchangers, product purities; pressure drops in heat exchanger passages, etc. on a continuous basis for predictive and preventive maintenance as well as for energy optimisation.

If for example thermal stresses are of heat exchangers are higher and simultaneously purity of one of streams is lost and pressure drops are low in that passage then it suggest leakage inside heat exchanger passage. The plant can be shutdown immediately. Online risk can be analysed continuously for predictive and preventive maintenance based on turbine inlet temperatures, thermal stresses and mechanical stresses, pressures of streams, pressure drops and other parameters, cooling down and warming up rates while starting and shutting down the plant. Machine learning or artificial intelligence programs can continuously check the pinch profile of heat exchangers and determine whether optimisation is necessary or whether potential to save energy is possible e.g. if the pinch point is larger than 1. This will help to minimise the disturbances created to change of set points of the plant. This module can be used for steady state as well as for dynamic state calculations.

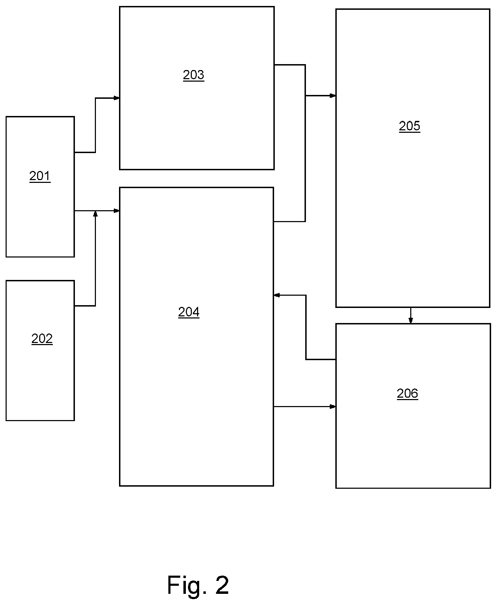

Fig. 2 schematically shows a preferred embodiment of the method according to the present invention as a block diagram.

In step 201 DCS measurements are performed, wherein inlet and outlet stream temperature, flows and pressures, and liquid product flows are measured online.

In step 202 the machine module determines power, efficiencies, flows, pressures, and temperatures for all inlet and outlet streams.

In step 203 a pipe model, e.g. an "Optisim" pipe model, performs calculations of heat exchanger inlet and outlet stream temperatures and flows based on a model based on actual geometry, i.e. geometries of the heat exchanger and effects of different fin geometries are considered. Unknown parameters can be estimated with this model. This is a dynamic model and yields precise data calculations. This model can be used for steady state calculation as well as for dynamic state calculations for start-up case and can also perform a reverification of data.

In step 204 the heat exchanger and plant performance "Excel" workbench tool integrated with DCS is used. This model is easy to implement and converges fast. This "Excel" tool is integrated with GMPS properties for the calculation of properties in critical conditions and calculation of actual heat exchanger profiles.

By means of the integration with DCS all heat integration and pinch analysis calculation can performed in "Excel". All DCS data for a heat exchanger module for all input and output streams is gathered.

An actual heat exchanger profile is calculated and shown with energy consumption of all compressors with recalculated machine flows from orifice dp measurements. The same calculations can also be done using "Smile Python" modules integrated with DCS data through plant automation software. The following modules can be used for this purpose: A heat exchanger module integrated with pinch analysis module.

In step 205 energy optimisation with pinch analysis and heat integration are performed online in "Excel". Automatic kf rescaling calculations are performed using design kf values. Pressure drop calculations are done using design cases. Cold production is calculated from turbine flows, liquid production and outlet pressure from DCS for turbine flow adjustments. Turbine streams and Joule-Thomson streams are recalculated from cold balance and enthalpy balance. The profile is optimised at a local point of operation by varying the pressure of machines, the ratio of Joule-Thomson streams and turbine streams and also using machine efficiencies to calculate the local optimum for energy consumption of the plant. This is done by bringing cold curves and hot curves closer and keeping DTmin at a pinch point of 1K as shown in Fig. 4. The global point of optimised operation is calculated by also considering other process parameters and process constraints. All these calculations can also be done simultaneously using "Smile Python" modules integrated in DCS, with help of a heat exchanger module with pinch analysis heat integration module, column module, condenser modules, an enthalpy module and an optimiser module. A local or a cloud installation both are possible. Calculated set points then are given to plant automation software for implementation on plant.

In step 206 data is stored in a cloud for plant performance and energy consumption monitoring. Each optimised case from the plant is fed to a data based machine learning program and is used to develop data based models for future predictions of process variables and total power consumption based on the given production. Machine learning offers the following advantages: An optimised starting point for the optimiser close to the global optimum can be determined. The optimised point of operation is already known if a case is repeated. Identical or similar plants can learn from each other. This can be done with help from MATLAB, R or python. This can be implemented locally or in a cloud.

Following equations are used for the calculation of the optimised heat exchanger profile online:

(1) Pressure drop recalculations can be done with help of following condition:

$$\Delta P_{new} = \left( \frac{V_{new}}{V_{design}} \right)^{\alpha} * \sqrt{\frac{(P_{design})}{P_{new}}} * \Delta P_{design}$$

$\Delta P_{new}$, $\Delta P_{design}$    are the pressure drops for a heat exchanger passage for a stream in the new and design case
$V_{new}$, $V_{design}$    are the volume flows for a stream in the new and design case
$P_{new}$, $P_{design}$    are the pressures of streams for the new and the design case
$\alpha$    is a known constant parameter

(2) Heat exchanger surface kf recalculations for rating cases can be done as follows:

$$kf_{new} = kf_{old} \frac{\sum warm\_Streams_{new}^{\beta} + \sum cold\_Streams_{new}^{\beta}}{\sum warm\_Streams_{old}^{\beta} + \sum cold\_Streams_{old}^{\beta}}$$

kf    is the heat exchanger surface in [kW/K]
kf    is determined as Q/MTD in [kW/K]
$\beta$    is a known constant parameter

(3) Enthalpy is calculated according to the following formula:

$$Q = m * Cp * \Delta T$$

m    is the flow in [Nm$^3$/hr]
Cp    is the specific heat in [kW/nm$^3$K]
$\Delta T$    is the temperature difference at inlet and outlet in [K]

Q      is the enthalpy in [kW]

The enthalpy is calculated for cold and warm streams for plotting cold curve and warm curves.

(4) The following process parameters are provided from other modules: Compressor or machine modules provide efficiencies of the turbines, boosters, compressors and precisely calculated flows are derived from orifice pressure drops for increased accuracy, as e.g. mentioned in the machine module as disclosed in the application 19020654.0.

(5) If design kf values are unknown then kf design values are calculated from the following Rottmann formula, where volume of heat exchanger is known:

$$V = \frac{(kf)^a F_m^b}{\gamma}$$

V           is the heat exchanger volume in [m³]
$F_m$       is the mean heat exchanger surface in [m²]
kf          is the heat exchanger surface in [kW/K]
a, b, $\gamma$    are known factors

(6) Power models and other empirical formulas can be used for reverification of the optimum point of operation of the plant and for cross checking of the flows.

$$LOXE = LOX + n*LIN + Y*LAR \; (LOX \; equivalent)$$

$$ICTOT = \lambda*HPGOXIC1 + \beta*MPGOXIC2 + X*GANIC + n*GARIC$$

$$(ICTOT \; Products)$$

$\gamma$, β, n, Y, X    are known constants
HPGOXIC     is high pressure internal compressed GOX
MPGOXIC     is medium pressure GOX internal compressed
GANIC       is gaseous nitrogen internal compressed
GARIC       is gaseous argon internal compressed

(7) Online cold balances across the gas plant using data based correlations:

a) Heat exchanger losses = m*Cp,gas *Delta T at the warm end Delta T = Temperature difference between incoming and Outgoing streams Usually calculated from DCS and/or from "Smile Python" heat exchanger module connected with DCS data of plant.

b) Q isolation = X *b * (net amount of incoming gas) $^a$ a, b and X are Known constants

c) Cold Power of Liquids, Joule Thomson,

$$\text{JT Delta T} = a * (P1-P2) *(273/T1)$$

T1 is inlet of heat exchanger,
P1 inlet pressure,
P2 outlet pressure
Joule Thomson stream cold production = M * Cp,gas * JT Delta T
$Cp_{gas}$ = specific heat of gas or air [Kcal/Nm3 K]

d)

$$\text{LIN equivalent} = \text{LIN} + v*\text{LOX} + n*\text{LAR} + m*\text{PLIN}$$

v, n and m are known constant

f) Cold requirement of process (KW) = heat exchanger warm end losses + cold power requirements of liquids - Joule Thomson stream cold production + isolation losses

g) Turbine flow can be estimated from total cold requirement of process:

$$\text{specific enthalpy gain turbine} = h_{air}(T_{inlet}, P_{inlet}) - h_{air}(T_{out}, P_{at})$$

$h_{air}$ = enthalpy air or gas,
T = temperature inlet,
P = pressure
$P_{at}$ = outlet pressure of turbine determined by pressure drop calculation

(8) Machine learning can be used for learning from various optimised cases which were already executed on the plant with optimised power consumption. Based on this empirical data, models can be developed for prediction of process variables to reach the local and global optimum power consumption faster. Machine learning program can compare the production figures with the existing cases to provide the optimised solution faster.

A databased correlation from machine learning program can be used from one plant to another if plants are similar or identical for future use.

If a FEM analysis is already performed for a heat exchanger, correlations between various process parameters (e.g. turbine inlet temperatures) and thermal stresses and number of life cycles can be determined, which can then be used for predicting a current thermal stress of the heat exchanger and a number of life cycles of the heat exchanger.

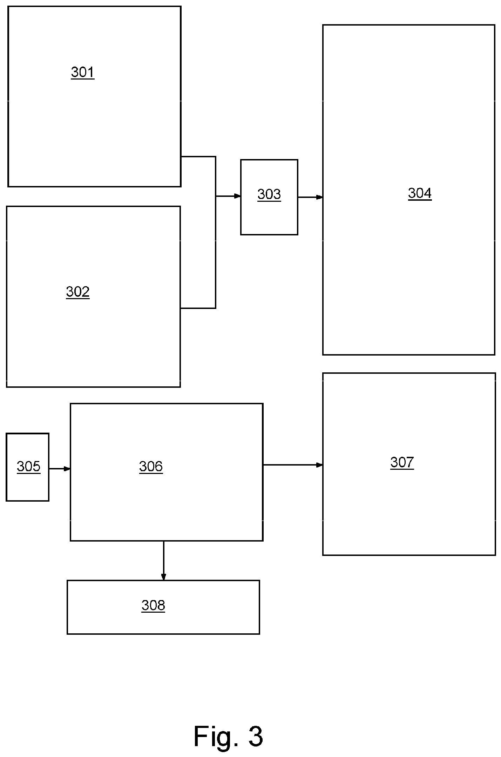

Fig. 3 schematically shows a preferred embodiment of the method according to the present invention as a block diagram.

Fig. 3 refers to a data driven machine learning workflow for repeat cases, reverification and prediction of process parameters and predicting energy consumption and other key plant indicators.

In step 301 optimised cases while designing the plant and are fed to a machine learning program in "Matlab" or "Python". Booster flows, MAC flows, JT flows, turbine power, MAC, BAC power, machine efficiencies from machine module are determined.

In step 302, for a given product configuration, plant process parameters are optimised with the help of heat integration and pinch analysis. This data sent to a cloud to train the machine learning program, in particular corresponding to booster flows, MAC flows, JT flows, turbine powers, MAC and BAC power, machine efficiencies from machine module.

In step 303 supervised learning is performed based on the correct and optimised data only.

In step 304 a data based model is created. Various correlational models are developed by parameter fitting, particularly corresponding to the following parameters:

1) MAC power vs air flow, pressure;
2) BAC power vs air flow, pressure, BAC efficiency vs flow
3) BAC flow vs product flows
4) MAC flow, BAC flow vs efficiencies
5) Turbine cold power and flow vs product flows (LIN/LOX equivalent + ICTOT)
6) Specific power for liquid production vs LIQ products
7) Machine efficiencies vs effective flow, pressure
8) Qt profile data, energy consumption data vs Products (LIN equivalent / LOX equivalent + ICTOT products)
9) Power of liquefaction vs ICTOT and LOXE
10) Power models for reverification of optimum point of operation Empirical data-based models predicting power consumption based on current product configuration of plant.

In step 305 data is gathered from the DCS.

In step 306 data is processed. A standard deviation is calculated between measured and predicted values. Further, the following is evaluated:

1) Are deviations in measured kf values and kf rescaled values less than 10%?
2) Are BAC, MAC, turbine, booster flow deviations smaller than 10%?
3) Are turbine power, MAC, power and BAC powers less than 10%?

4) Are efficiencies and power deviating less than 10%?

If these four deviations are larger than 10%, the in step 308 results are shown with errors.

If these four deviations are smaller than 10%, the in step 307, data based empirical models are created. Predicted values of process parameter variables, re-verified process flows for existing and new cases are determined. Flow error prediction and corrected flow calculation for DCS is performed. Predicted values of specific energy consumption are determined. Prediction of optimum process parameters are sent to the heat exchanger module for further optimisation.

Fig. 4a and 4b schematically show an online pinch analysis and heat integration for gas process plants such as air separation plants, natural gas plants, etc. with help of a "Smile" heat exchanger module and an optimiser module.

Fig. 4a schematically shows the DCS system 400. Fig. 4b schematically shows a corresponding temperature enthalpy TQ diagram 500, which can be determined by the DCS system 400. The horizontal axis represents the enthalpy Q. The diagram 500 shows a hot composite curve 501, a cold composite curve 502 and a pitch point 503.

The present method provides a tool or program for online energy optimisation can be used for online calculation of heat exchanger profiles and pinch point calculation based on DCS data and GMPS physical property methods. Better heat integration can be achieved by optimising energy consumption of the plant. This online energy optimisation tool can directly be installed as additional product with process automation software or can be offered as a customer service for lifetime of the plant on pay per use basis. The tool can be used to reduce equipment lifetime consumption of load changes. For instance by reducing spatial and temporal temperature variation (dT/dx or dT/dt) in the heat exchanger, thermal stresses can be reduced. These quantities could be used as optimisation constraints in the control strategy. However, also more sophisticated models for thermal stresses (e.g. generated by machine learning) can be used. Accumulated lifetime consumption information may be used for a predictive maintenance customer service. This tool can be used as an online asset management service for plants as well as for third party customers. This tool or program can use online efficiencies from boosters, turbines and compressors from machine modules for correct power estimation of the plant and optimisation of heat exchanger profiles. Online cold balance, heat loss balance and estimation of boosters, turbine flows can be done with this tool for optimum heat exchanger profile calculation. An optimum point of operation can be predicted and predicted values can be passed on to the process automation software for execution of the cases. This tool can be integrated with other automation tools for precise calculation of the next cases, e.g. LMPC, APCS. Control procedures can be optimised by machine learning algorithms. Data based models of identical plant types ("ECOGAN", "SCALE", "IMPACT") can be transferred between identical plants. Optimised points of operation can be stored in a cloud, where the optimised cases for repetitive product constellations can be repeated for the same plant or for another plants, which is identical. Online pinch analysis and heat integration can be used at any point of operation to optimise an overall energy consumption of the plant. Online plant efficiency review can be performed using this tool and detailed reporting based on machine efficiency and heat exchanger profiles can be generated. This can e.g. be offered as after sales service or as a cloud service and also as an additional product along with process automation software. Additional key performance indicators for the plant required can be incorporated in these tools. Plant power consumption can be recorded at various points of operation and better production decisions can be taken. Similarly, energy consumption for different product constellations can be predicted, for example more liquid products with same energy consumption can be produced.

Summarising, the present invention relates to a method for operating a heat exchanger, wherein current data characterising a current operation of the heat exchanger is determined, wherein an online pinch analysis and heat integration are performed in dependence of the current pant parameters, wherein an optimum operating point of energy for the plant is determined as a result of the pinch analysis and heat integration on heat exchangers streams. New process parameters with optimum point of operation can then be given as new set points to plant automation software such as APCS, ASPEN ONE, Aveva Simcentral etc. All mentioned modules are programmed in "Smile Python" modules or "Optisim" modules or excel modules can be used with any plant automation software. Also process and heat exchanger parameters are estimated using the data-based correlations also for reverification of simulated values and short cut calculations. Heat exchanger modules uses data from modules from the plant such as column modules, condenser module, valve module and other equipment module connected to the heat exchanger for estimate the current state of the plant and heat exchanger.

Thermal stresses inside the heat exchanger are determined using data-based correlations and enthalpy temperature diagram or pinch analysis diagram as shown in Fig. 4 for the heat exchanger. Heat integration and energy optimisation is carried out with help of "Smile Python" optimiser module. Optimiser module can also be used from any other plant automation software for energy optimisation.

Pinch analysis and heat integration are carried out online by plotting cold and hot composite curves using a heat exchanger "Smile" module.

The online analysis method for rating, pinch analysis and performance calculation also includes calculation of current thermal stresses inside the heat exchangers using data based correlations and various process parameters which can be used for predictive and preventive maintenance of heat exchangers. The heat exchanger module uses machine learning programs to develop and update data based models. Artificial intelligence programs can be used to monitor continuously critical parameters of heat exchangers such as thermal stresses, various temperatures, flows and pressures, pressure drops, and product purities in order to protect heat exchangers from any damage. Preventive and predictive maintenance of heat exchangers can be undertaken more proactively and automatically using artificial intelligence software along with plant automation software.

The heat exchanger can be a plate-fin heat exchanger or a coil-wound heat exchanger, but same schematics can be applied to other types of heat exchangers for heat integration and energy optimisation.

**Claims**

1. A method for operating a heat exchanger,
   wherein current data characterising a current operation of the heat exchanger is determined,
   wherein a pinch analysis is performed in dependence of the current data, wherein an optimum operating point of the heat exchanger is determined as a result of the pinch analysis.

2. The method according to claim 1, wherein one or several of the following is determined as the current data:

   a temperature of an input streams and/or of an output stream;
   a pressure and flow of an input streams and/or of an output stream;
   pressure drops in the heat exchanger;
   a flow of an input streams and/or of an output stream;
   online cold balance, mass and enthalpy balance across the heat exchanger;
   efficiency of an air compressor, a booster air compressor, a booster and a turbine.

3. The method according to claim 1 or 2, wherein temperature profiles are determined as the current data.

4. The method according to any one of the preceding claims, wherein the optimum operating point is determined such that an energy consumption of the heat exchanger is minimised.

5. The method according to any one of the preceding claims, wherein the heat exchanger is plate-fin heat exchanger or a coil-wound heat exchanger.

6. The method according to any one of the preceding claims, wherein the heat exchanger is used in a process engineering plant.

7. The method according to claim 6, wherein the process engineering plant is an air separation unit and/or a natural gas plant and/or an ethylene plant and/or a hydrogen plant and/or an adsorption plant.

8. Computing unit which is, in particular programmatically, configured to perform a method according to any one of the preceding claims.

Fig. 1

Fig. 2

Fig. 3

Fig. 4a

Fig. 4b

Europäisches
Patentamt

European
Patent Office

Office européen
des brevets

# EUROPEAN SEARCH REPORT

Application Number

EP 20 02 0527

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/369548 A1 (FERSTI JOHANN [DE] ET AL) 24 December 2015 (2015-12-24) * paragraphs [0001] - [0009], [0017] - [0029], [0066]; figures 1-3 * | 1-8 | INV. F28F27/00 G05B13/02 |
| X | EP 2 275 649 A1 (ABB RESEARCH LTD [CH]) 19 January 2011 (2011-01-19) * paragraphs [0001], [0008] - [0022], [0028] - [0043]; figures 1-6 * | 1,2 | ADD. F28D7/02 F28F9/00 |
| A | US 2005/155754 A1 (VALENSA JEROEN [US] ET AL) 21 July 2005 (2005-07-21) * abstract; figures 1-4 * * paragraphs [0001], [0002], [0005] - [0012], [0036] - [0043] * | 1-8 | |
| A | US 2015/090647 A1 (VICTORIA UNIVERSITY [AU]) 2 April 2015 (2015-04-02) * paragraph [0003]; examples 1-3 * | 1-8 | |
| A | EP 0 244 205 A2 (BOC GROUP PLC [GB]) 4 November 1987 (1987-11-04) * the whole document * | 1-8 | TECHNICAL FIELDS SEARCHED (IPC) |
| A | WO 2011/150462 A1 (CO2CRC TECHNOLOGIES PTY LTD [AU] ET AL.) 8 December 2011 (2011-12-08) * page 1, line 1 - page 7, line 15 * | 1-8 | F28F F28D F25J G05B G06N |
| A | US 2011/054715 A1 (NOURELDIN MAHMOUD BAHY [SA] ET AL) 3 March 2011 (2011-03-03) * paragraphs [0007], [0015] * | 1-8 | |

The present search report has been drawn up for all claims

| Place of search | Date of completion of the search | Examiner |
|---|---|---|
| Munich | 4 March 2021 | Leclaire, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 02 0527

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2021

| Patent document cited in search report | | Publication date | Patent family member(s) | | Publication date |
|---|---|---|---|---|---|
| US 2015369548 | A1 | 24-12-2015 | AU | 2013329887 A1 | 16-04-2015 |
| | | | CN | 104884893 A | 02-09-2015 |
| | | | EP | 2906897 A1 | 19-08-2015 |
| | | | RU | 2015116266 A | 10-12-2016 |
| | | | US | 2015369548 A1 | 24-12-2015 |
| | | | WO | 2014056588 A1 | 17-04-2014 |
| EP 2275649 | A1 | 19-01-2011 | CN | 102459824 A | 16-05-2012 |
| | | | CN | 104975891 A | 14-10-2015 |
| | | | EP | 2275649 A1 | 19-01-2011 |
| | | | EP | 2554804 A2 | 06-02-2013 |
| | | | JP | 5199517 B2 | 15-05-2013 |
| | | | JP | 5670488 B2 | 18-02-2015 |
| | | | JP | 2012530207 A | 29-11-2012 |
| | | | JP | 2013152073 A | 08-08-2013 |
| | | | RU | 2012101601 A | 27-07-2013 |
| | | | US | 2012080168 A1 | 05-04-2012 |
| | | | US | 2015129158 A1 | 14-05-2015 |
| | | | WO | 2010145963 A1 | 23-12-2010 |
| US 2005155754 | A1 | 21-07-2005 | BR | PI0418415 A | 15-05-2007 |
| | | | CN | 1898523 A | 17-01-2007 |
| | | | GB | 2424724 A | 04-10-2006 |
| | | | JP | 2007518664 A | 12-07-2007 |
| | | | US | 2005155754 A1 | 21-07-2005 |
| | | | WO | 2005071341 A2 | 04-08-2005 |
| US 2015090647 | A1 | 02-04-2015 | AU | 2012222868 A1 | 03-10-2013 |
| | | | EP | 2680955 A1 | 08-01-2014 |
| | | | ES | 2761330 T3 | 19-05-2020 |
| | | | US | 2015090647 A1 | 02-04-2015 |
| | | | WO | 2012116409 A1 | 07-09-2012 |
| EP 0244205 | A2 | 04-11-1987 | AU | 600266 B2 | 09-08-1990 |
| | | | CN | 87103872 A | 18-11-1987 |
| | | | EP | 0244205 A2 | 04-11-1987 |
| | | | JP | H0784980 B2 | 13-09-1995 |
| | | | JP | S62293076 A | 19-12-1987 |
| | | | US | 4758257 A | 19-07-1988 |
| | | | ZA | 873040 B | 21-10-1987 |
| WO 2011150462 | A1 | 08-12-2011 | AU | 2011261169 A1 | 10-01-2013 |
| | | | WO | 2011150462 A1 | 08-12-2011 |
| US 2011054715 | A1 | 03-03-2011 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 19020654 A

- US 19020654